# EUROPEAN PATENT APPLICATION

(11) **EP 2 878 935 A1**
(43) Date of publication of application: **03.06.2015**
(21) Application number: 13194770.7
(22) Date of filing: 28.11.2013
(51) Int. Cl.: G01G 19/02

(54) **Road vehicle weigh-in-motion method, system and apparatus**

(71) Applicant: Transporta un sakaru instituts, 1019 Riga (LV)
(72) Inventor: Grakovski, Alexander, LV-1019 Riga (LV); Kabashkin, Igor, LV-1019 Riga (LV); Krasnitsky, Yury, LV-1019 Riga (LV); Laksa, Igor, LV-1019 Riga (LV); Petersons, Elmars, LV-1019 Riga (LV); Pilipovecs, Alexey, LV-1019 Riga (LV); Truhachov, Victor, LV-1019 Riga (LV)
(74) Representative: Osmans, Voldemars

(57) **Abstract**

A method for road vehicle weigh-in-motion comprising the steps of obtaining wheel load signals (34) from a plurality of elongated fibre-optic sensors (12-17) embedded in a road surface (46), each signal (34) being indicative of a wheel load as the vehicle (24) travels across the sensors (12-17); determining a velocity of the vehicle (24); determining a width (W) of a wheel tire (28); and determining a weight of each wheel, wherein the step of determining the weight of the wheel comprises decomposing the wheel load signal (34) into an even and odd components (36, 37), reconstructing a footprint (30) of the wheel tire (28) based on a footprint model (38), the width of the tire (W), and the wheel load signal (34) by aligning the characteristic points (A, B, C, D) of the footprint model 30 with the characteristic points (a, b, c, d) of the odd component (37) of the wheel load signal (34), and calculating the wheel weight from the reconstructed footprint (30) and the even component (36) of the signal (34). The corresponding apparatus and system are also provided.

## Description

### Technical Field

The invention relates to road vehicle weigh-in-motion method, system and apparatus, in particular to such method, system and apparatus using fibre-optic sensors.

### Background Art

The task of measuring a weight of a moving road vehicle also called weigh-in-motion or WIM is important for road management. Analysis of the WIM current trends indicates that fibre-optic sensors are more reliable and durable in comparison to the strain gauge and piezoelectric sensors. However, the traditional methods of calculating a wheel weight, as an integral of a load sensor signal, do not provide required accuracy when applied to fibre-optics sensors. The problem with accuracy of fibre-optic sensors is, for example, discussed in details in Grakovski et al., 2013. The main causes of low accuracy are the blurred front and end parts of the wheel signal and general non-linearity of the sensor's characteristics.

For example, U.S. Pat. No. 5.260.520 issued Nov. 9, 1993, discloses an apparatus for weighing a vehicle in motion using a plurality of elongated fibre-optic sensors defined by an optical fibre embedded in a casement of electrometric material and disposed parallel to each other on the roadway in the path of a moving vehicle. Switch means are used in conjunction with the sensors to provide signals indicative of the speed of the moving vehicle, the number of axles, weight distribution, tire position, and the wheel base of the vehicle. The switch means are formed of optical fibres and the extent of light transmission through the fibres during contact with the tire of the vehicle is indicative of the vehicle weight. While the apparatus may be useful in many applications where a high degree of accuracy in weighing vehicles is not essential, it is desirable to improve the accuracy of fibre-optic sensor apparatus for weighing vehicles.

The object of the present invention is to improve the accuracy of the weigh-in-motion systems which are based on fibre-optics sensors.

### Summary of invention

The problem of improving accuracy of measuring road vehicle weight in a weigh-in-motion system based on fibre-optic sensors is solved by decomposing the sensor signal on even and odd components and using the odd component for reconstructing tire footprint and the even component to calculate wheel weight taking into account the footprint area.

In one aspect, the invention provides a method for road vehicle weigh-in-motion comprising the steps of
obtaining wheel load signals from a plurality of elongated fibre-optic sensors embedded in a road surface, each signal being indicative of a wheel load as the vehicle travels across the sensor;
b) determining a velocity of the vehicle;
c) determining a width of a wheel tire, and;
d) determining a weight of each wheel, wherein the step of determining the weight of the wheel comprises
   - decomposing the wheel load signal into an even and odd components;
   - reconstructing a footprint of the wheel tire based on a footprint model, the width (of the tire, and the wheel load signal by aligning the characteristic points of the footprint model with the characteristic points of the odd component of the wheel load signal; and
   - calculating the wheel weight from the reconstructed footprint (28) and the even component of the signal.

Preferably, the step of calculating the wheel weight comprises calculating an integral of the even component of the signal. Still more preferably, the step of calculating the wheel weight comprises calculating of an integral over time from the result of multiplication of the even component of the signal, proportional the pressure, and an instantaneous footprint width, multiplied by the velocity of the vehicle.

Advantageously, the method comprises the process of linearisation of the even component of the signals prior to using it in the wheel weight calculation.

Advantageously, the footprint model is in shape of stadium and comprises a first half-ellipse part, a rectangular part, and a second half-ellipse part. Such a model provides a good approximation of the real footprint and four characteristic points that can be aligned with the four extremums of the odd component of the sensor signal.

Preferably the characteristic points of the footprint model are beginning of the footprint, beginning of the rectangular part, end of the rectangular part, end of the footprint, and the characteristic points of the odd component of the signal are first maximum, first minimum, second maximum, and second minimum. In other words, two extremum points from each side of the odd component's point of symmetry are used.

Still more preferably, the step of decomposing the signal into an even and odd components comprises the determination of a centre line of mass for the pulse shape in the signal and using this line position on the time scale as the origin point for the decomposing the signal into even and odd components. Using the centre of mass as the centre for the signal decomposition produces the odd component with clearly distinctive points.

Preferably, the method comprises the step of determining an axle weight and/or the total weight of the vehicle as the sum of the weights of the axel wheels and/or the sum of the weights of all wheels of the vehicle. As namely the axel weight and total vehicle weight are used in many traffic regulations.

In another aspect, the invention provides a system for road vehicle weigh-in-motion comprising:
a plurality of fibre-optic sensors embedded in the road surface, each sensor providing a signal indicative of a wheel load of a vehicle wheel running over the sensor,
a processor being in communication with the sensors and configured to calculate a wheel weight, wherein
the processor is configured to decompose the sensor's signal into even and odd components, to reconstruct a footprint of the wheel tire based on a footprint model, the width of the tire, and the wheel load signal by aligning the characteristic points of the footprint model with the characteristic points of the odd components of the wheel load signal, and to calculate the wheel weight from the footprint and the even component of the signal.

Preferably, the plurality of fibre-optic sensors comprises at least one sensor embedded at an angle to transverse direction to the vehicle path. When one sensor is located transversely to the vehicle path and another at a slant, the angle between two sensors should be less than 90°, the difference in sensors signals allows to calculate the width of a tire.

Preferably, each fibre-optic sensor is installed in a groove made in the road surface. The installation in a groove makes the sensor surface even with the road surface, thus the sensors do not disturb the vehicle movements.

Advantageously, the fibre-optic sensors comprise a fibre-optic cable wound around an elongated core. This type of fibre-optic sensors provides a reliable signal that is suitable for the present method for restoring the tire footprint and accurate weighing.

In still another aspect, the invention provides an apparatus for road vehicle weigh-in-motion configured to obtain signals from a plurality of fibre-optic sensors embedded in the road surface, each sensor providing a signal indicative of a wheel loading of a vehicle wheel running over the sensor, the apparatus comprising:
a means for determining a width of a wheel tire from the signals of the sensors;
a means for determining a velocity of the vehicle from the signals of the sensors; and
a processor for calculating the wheel weight, **characterised in that**
the apparatus further comprises a means for decomposing the sensor signal into even and odd components; and
the processor is being configured to calculate a footprint of the wheel tire based on a footprint model, the width of the tire, and the wheel load signal by aligning the characteristic points of the footprint model with the characteristic points of the odd component of the wheel load signal, and to calculate the wheel weight from the footprint and the even component of the signal.

Advantageously, the processor is being configured to calculate the wheel weight by calculating an integral over time from the result of multiplication of the even component of the signal, proportional the pressure, and an instantaneous footprint width, multiplied by the velocity of the vehicle.

### Definitions

**Fibre-optic sensor** - is the sensor where a fibre-optic cable is used as the element of sensing.

**Wheel weight -** by the wheel weight in the context of this application is meant the part of the vehicle's weight acting upon the road through the given wheel.

**Instantaneous tire width** - the width of the tire footprint at given time at the centre of the sensor.

**Centre of mass** or centre line of mass for the signal is the point on the time scale (or a line conducted through this point) at which the areas under the left and right parts of the signal are equal.

### Brief description of drawings

FIG. 1 shows a schematic view of the weigh-in-motion system according to the invention.
FIG. 2 shows a road vehicle.
FIG. 3 shows a wheel, sensor, and footprint of the wheel tire
FIG. 4 shows a signal from one of the sensors for the vehicle of FIG. 2.
FIG. 5 shows an enlarged part of the signal corresponding to one wheel.
FIG. 6 shows an even component of the wheel signal.
FIG. 7 shows an odd component of the wheel signal.
FIG. 8 shows an alignment of the footprint model with the odd component of the signal.

### Description of embodiments

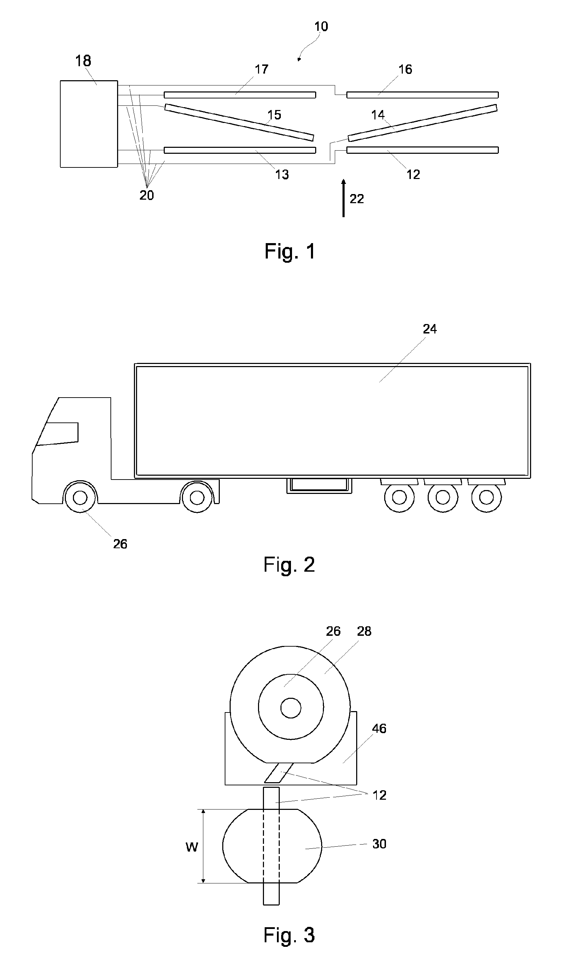

Referring to FIG. 1 a weigh-in-motion system 10 generally is composed of the fibre-optic sensors 12-17 installed in the road surface generally transverse to the driving direction 22 and an electronic apparatus 18 for processing the sensor signals. The sensors 12-17 are connected with the electronic apparatus 18 by cables 20. In this embodiment the fibre-optic sensors 12-17 also comprise an electronic transducer (not shown) for supplying an input light to the sensors and converting the output light into electrical signals, in another embodiment the electronic apparatus 18 may supply the optical radiation to the sensors 12-17, receive the optical output from the sensors 12-17 and convert it into electrical signals.

As shown in FIG. 1 the elongated fibre-optic sensors 12-17 are installed on both sides of the traffic line. The fibre-optic sensors 12-17 are embedded into the road surface, by making a grove in the road surface, installing a sensor in the grove and filling the remaining gap with resilient rubber or other elastic material. In the preferred embodiment PUR sensors produced- by Sensor Line GmbH are used. The signal in these sensors depends on the change of the transparency and correspondingly the intensity of the light during the deformation. However any other fibre-optic sensors with similar characteristics may be used.

The sensors 13, 15, and 17 provide the signals from the left wheels of a vehicle running over the sensors, and sensors 12, 14, and 16 provide the signals from the right wheels of the vehicle. As it is known in the art, various vehicle parameters may be determined from the signals of the sensors. In this N-shaped sensor arrangement, a time delay between signals from two sensors, for example, sensors 12 and 16 may be used to determine the velocity of the vehicle, whereas a difference in signal duration between signals from two sensors aligned at different angles to the direction of vehicle movement, for example sensors 12 and 14, may be used to determine the tire width.

The most difficult part is to determine a wheel weight. By the wheel weight in the context of this application is meant the part of the vehicle weight acting upon the road through the given wheel. FIG. 2 shows a truck 24 having ten wheels 26 and FIG. 3 shows one of the truck wheels 26 running over one of the sensors 12 embedded in the road surface 46. It is clear that at any given moment only part of the tire 28 impacts the sensor 12 and the sensor output represent the tire footprint 30 over time. The traditional methods of determining the wheel weight from the length of the tire footprint 30 and the amplitude of the sensor signal, or by integrating the sensor output work well with traditional sensors, for example, strain gouge sensor but do not provide required accuracy when used with the fibre-optic sensors.

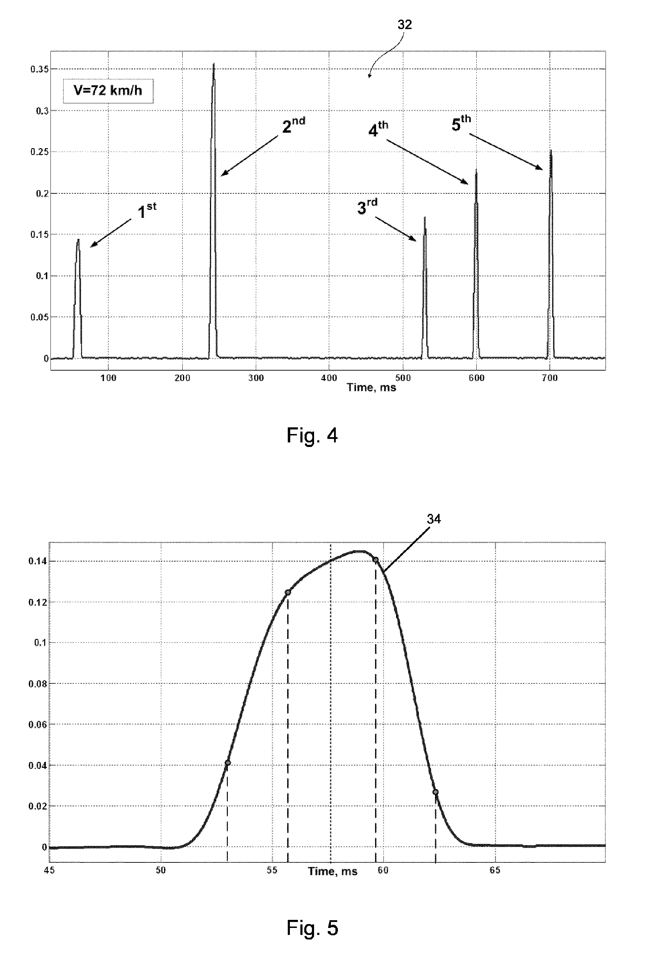

A road vehicle 24 running over a sensor 12 produces a signal that has a number of separate pulses each pulse representing an impact of one wheel. An example of the sensor signal 32 is shown in FIG. 4. A five-axle truck 24 similar to those shown in FIG. 2 may produce a signal similar to the signal 32. An enlarged image of one wheel signal 34, a part of the signal 32 corresponding to the first wheel, is shown in FIG. 5. In the proposed system 10, that signal 34 is used for the wheel weight calculation in the electronic apparatus 18.

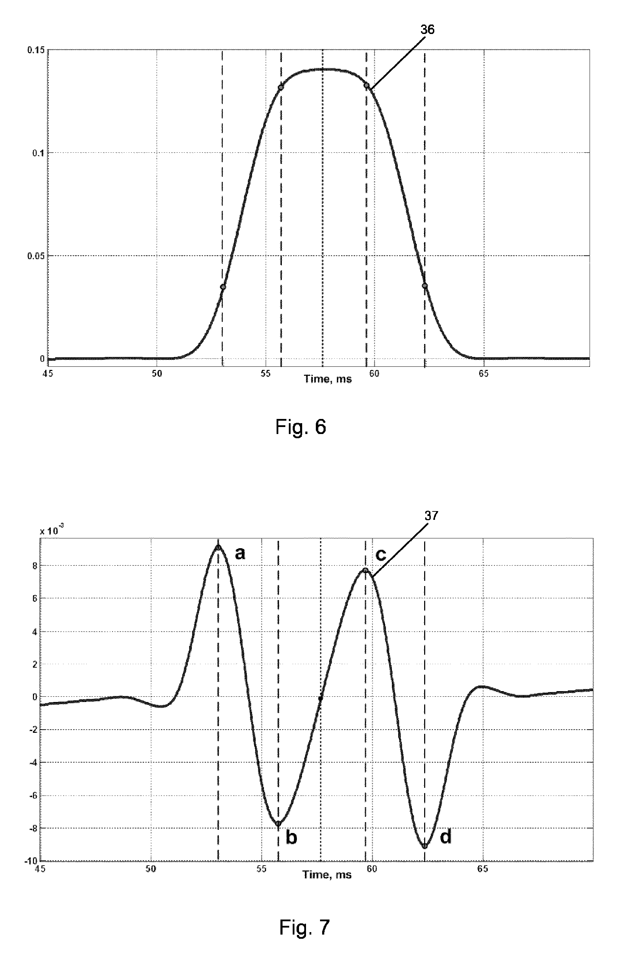

In the electronic apparatus 18, each wheel load signal 34 is decomposed into even and odd components (36, 37). The even component 36 of the signal 34 is shown in FIG. 6 and the odd component 37 in FIG. 7. The inventors found that the best results of the footprint restoration were obtained when the centre line of mass for the signal or the point on the time scale at which the areas under the left and right parts of the signal are equal was chosen as the origin point for the signal decomposition into even and odd components. The decomposition of the wheel signal 34 into even and odd components may be done by any method known in the art. For example, the polynomial approximation using the least square method and the further grouping of the members with even and odd powers separately may be used. Alternatively, standard even-odd decomposition of the signal on finite window may be used. Generally, any known method for decomposition of a function into an even and odd components may be used.

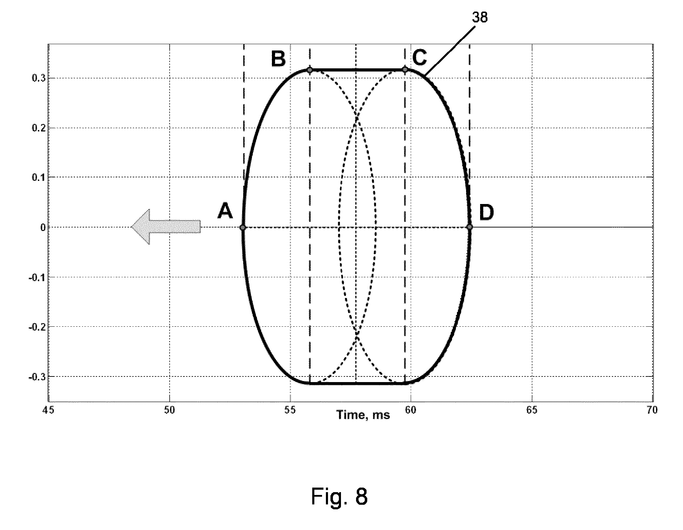

The odd component 37, as can be seen in FIG. 7, has four extremums, designated by lower case letters a, b, c and d. Whereas FIG. 8 shows a footprint model 38 used in the wheel weight calculation that also has four characteristic points, designated by upper case letters A, B, C, and D. In the model used in this embodiment, the footprint consists of a first half-ellipse (from A to B), a rectangular BC, and a second half-ellipse CD. The model is transformed along the time axis so that the characteristic points A, B, C, D of the model be located at the same points on the time axis where the characteristic points a, b, c, d of the odd component 37 are located. In other words, point A of the model is placed at the time where point a of the odd component 37 of the signal 34 is located, point B of the model is aligned with point b of the signal, C with c and D with d. The instantaneous footprint width, that is the width of the reconstructed footprint at any given time moment, is used in the further wheel weight calculation. The footprint width is defined by ellipse forms for the time intervals from A to B and from C to D and is equal to the tire width W for the time interval from B to C.

The even component 36 of the wheel signal 34 is indicative of the force with which the wheel or the tire is pressing on the sensor. However, the form of the even component 36 is distorted along the vertical scale because of the non-linearity of the sensors characteristic and the even component 36 needs to be linearised before it can be used in the weight calculation. The linearisation, for example, may be performed by means of a lookup table as the storage of sensor's characteristics measured in advance for different values of temperature, speed of the wheel, and width of the tire. Advantageously, the number of sensor's characteristics measured for different conditions may be stored and a certain characteristic may be used for the linearisation depending on these conditions.

Now we have all the components ready for the wheel weight estimation or calculation. In the present embodiment, to calculate the wheel weight an integral is calculated from the instantaneous width of the restored footprint 38 multiplied by the pressure value that is represented by the linearised even component 36, and the result is multiplied by the vehicle velocity.

Further, the axle weights are calculated by summarising the weights of the separate wheels belonging to each axle. Finally, the total weight of the vehicle is calculated as either the sum of the wheel weights or as the sum of the axle weights.

The process of estimating or calculating the weight of the vehicle may be summarised in as follows. The signals from the sensors are digitised and stored in the memory. Then for each wheel of the vehicle the velocity of the vehicle, and the width of the tire are calculated. Then a signal that corresponds to one wheel running over the sensor is chosen and the centre line of mass is determined for this signal and the signal is decomposed into even and odd components taking the centre line of mass location as the origin point for the decomposition. The even component of the signal is linearised taking into account the non-linearity of the sensor pressure-output characteristic. The tire footprint is reconstructed or the footprint model is aligned with the odd component of the signal. The wheel weight is calculated as an integral over time from the result of multiplication of the even component of the signal, and an instantaneous footprint width, multiplied by the velocity of the vehicle. The weight calculation is performed for each wheel of the vehicle and the total vehicle weight is calculated as the sum of the wheel weights. If needed, the axle weights may be calculated in the same manner.

Taking into account the properties of each individual sensor, the calibration of the fibre-optic sensors should be conducted twice: at first in the laboratory, and once more, after installing the sensor in the road surface using the vehicles with known weight.

The electronic apparatus 18 may be further configured to adjust wheel weight calculation taking into account other parameters influencing the sensor response. For example, environment temperature, vehicle acceleration, etc. may be allowed for when calculating wheel weight.

### Industrial applicability

The present invention may be utilized for road vehicle weigh-in-motion systems. The invention provides for the improved accuracy and reliability of weighing road vehicle in motion.

### Reference signs list

10 WIM system
12 sensor
13 sensor
14 sensor
15 sensor
16 sensor
17 sensor
18 electronic apparatus
20 cable
22 driving direction
24 truck (vehicle)
26 wheel
28 tire
30 footprint
32 truck signal from one sensor
34 one wheel signal
36 even component
37 odd component
38 footprint model
40 first half-ellipse
42 second half-ellipse
44 rectangular part
46 road surface

### References

- US 5260520 A (MARTIN MARIETTA ENERGY SYSTEMS) 09.11.1993
- GRAKOVSKI, Alexander, et al. Tyre Footprint Reconstruction in the Vehicle Axle Wight-in-Motion Measurement by Fibre-optic Sensors. Proceedings of the 10th Int. Conf. on Informatics in Control, Automation and Robotics (ICINCO-2013). 2013, p.527-536.

## Claims

1. A method for road vehicle weigh-in-motion comprising the steps of:
a) obtaining wheel load signals (34) from a plurality of elongated fibre-optic sensors (12-17) embedded in a road surface (46), each signal (34) being indicative of a wheel load as the vehicle (24) travels across the sensors (12-17);
b) determining a velocity of the vehicle (24);
c) determining a width (W) of a wheel tire (28), and;
d) determining a weight of each wheel, **characterized in that** the step of determining the weight of the wheel comprises
decomposing the wheel load signal (34) into an even and odd components (36, 37);
reconstructing a footprint (30) of the wheel tire (28) based on a footprint model (38), the width (W) of the tire (28), and the wheel load signal (34) by aligning the characteristic points (A, B, C, D) of the footprint model with the characteristic points (a, b, c, d) of the odd component (37) of the wheel load signal (34); and
calculating the wheel weight from the reconstructed footprint (30) and the even component (36) of the signal (34).

2. The method of claims 1 wherein the step of calculating the wheel weight comprises calculating an time integral of the even component (36) of the signal (34).

3. The method of claim 1-2 wherein the step of calculating the wheel weight comprises calculating of an integral over time from the result of multiplication of the even component (36) of the signal (34), related to the pressure, and an instantaneous footprint width, multiplied by the velocity of the vehicle (24).

4. The method of claim 3 comprising linearisation of the even component (36) of the signal (34).

5. The method of claim 1-4 wherein the footprint model (38) is in stadium-shaped and comprises a first half-ellipse part, a rectangular part, and a second half-ellipse part.

6. The method of claim 5 wherein the characteristic points (A, B, C, D) of the footprint model (38) are the beginning of the footprint (A), the beginning of the rectangular part (B), the end of the rectangular part (C), and the end of the footprint (D), whereas the characteristic points of the odd component (37) of the signal (34) are the first maximum (a), the first minimum (b), the second maximum (c), and the second minimum (d).

7. The method of claim 6 wherein the characteristic points of the odd component (37) of the signal (34) are two extremum points from each side of its point of symmetry.

8. The method of claim 1-7 wherein the step of decomposing the signal (34) into an even and odd components (36, 37) comprises the determination of a centre line of mass for pulse shape in the signal (34) and using this line position on the time scale as the origin point for the decomposing the signal (34) into even and odd components (36, 37).

9. The method of claim 1-8 further comprising the step of determining an axle weight and/or the total weight of the vehicle (24) as the sum of the weights of the axel wheels and/or the sum of the weights of all wheels of the vehicle (24).

10. A system (10) for road vehicle weigh-in-motion comprising:
a plurality of fibre-optic sensors (12-17) embedded in the road surface (46), each sensor (12-17) providing a signal (34) indicative of a wheel loading of a vehicle (24) wheel running over the sensor (12-17),
a processor being in communication with the sensors (12-17) and configured to calculate a wheel weight, **characterised in that**
the processor is configured to decompose the sensor signal (34) into even and odd components (36, 37), to reconstruct a footprint (30) of the wheel tire (28) based on a footprint model (38), the width (W) of the tire (28), and the wheel load signal (34) by aligning the characteristic points (A, B, C, D) of the footprint model (38) with the characteristic points (a, b, c, d) of the odd component (37) of the wheel load signal (34), and to calculate the wheel weight from the footprint (30) and the even component (36) of the signal (34).

11. The system (10) according to claim 10 wherein the plurality of fibre-optic sensors (12-17) comprises at least one sensor (14, 15) embedded at an angle to transverse direction to the vehicle path (22).

12. The system (10) according to claim 10 wherein each fibre-optic sensor (12-17) is installed in a groove made in the road surface (46).

13. The system (10) according to claim 10 wherein the fibre-optic sensor (12-17) comprises a fibre-optic cable wound around an elongated core.

14. An apparatus (18) for road vehicle weigh-in-motion configured to obtain signals from a plurality of fibre-optic sensors (12-17) embedded in the road surface (46), each sensor providing a signal (34) indicative of a wheel loading of a vehicle wheel (26) running over the sensor (12-17), the apparatus (18) comprising:
a means for determining from the signals of the sensors (12-17) a width of a wheel tire (28);
a means for determining from the signals of the sensors (12-17) a velocity of the vehicle (24); and
a processor for calculating the wheel weight, **characterised in that** the apparatus (18) further comprises
a means for decomposing the sensor signal (34) into even and odd components (36, 37); and
the processor is being configured to calculate a footprint (30) of the wheel tire (28) based on a footprint model (38), the width (W) of the tire (28), and the wheel load signal(34) by aligning the characteristic points (A, B, C, D) of the footprint model (38) with the characteristic points (a, b, c, d) of the odd component (37) of the wheel load signal (34), and to calculate the wheel weight from the footprint (30) and the even component (36) of the signal (34).

15. The apparatus (18) of claim 14 wherein the processor is configured to calculate the wheel weight by calculating of an integral over time from the result of multiplication of the even component (36) of the signal (34), proportional the pressure, and an instantaneous footprint width, multiplied by the velocity of the vehicle (24).
